# EUROPÄISCHE PATENTANMELDUNG

(11) **EP 2 312 079 A1**
(43) Veröffentlichungstag der Anmeldung: **20.04.2011**
(21) Anmeldenummer: 09013135.0
(22) Anmeldetag: 17.10.2009
(51) Int. Cl.: E04C 2/54

(54) **Stegplatte enthaltend expandierten Füllstoff**

(71) Anmelder: Bayer Sheet Europe GmbH, 64293 Darmstadt (DE)
(72) Erfinder: Eynde, Wim, 8720 Dentergem (BE); Pingel, Norbert, Dr., 64397 Modautal (DE)
(74) Vertreter: Klimiuk, Meike

(57) **Zusammenfassung**

Die vorliegende Erfindung betrifft eine teilweise lichtdurchlässige Platte enthaltend interne Hohlkammern, die dadurch gekennzeichnet ist, dass alle oder Teile ihrer internen Hohlkammern im wesentlichen raumausfüllend einen Füllstoff mit Isolationseigenschaften enthalten.

## Beschreibung

Die vorliegende Erfindung betrifft eine teilweise lichtdurchlässige Platte enthaltend interne Hohlkammern, die dadurch gekennzeichnet ist, dass alle oder Teile ihrer internen Hohlkammern im wesentlichen raumausfüllend einen Füllstoff mit Isolationseigenschaften enthalten.

In der US 2009/0029144 A1 wird beschrieben, dass lichtdurchlässige geschäumte Kunststoffplatten erhalten werden, wenn der Schaum Zellen bestimmter Dimension enthält. Hierbei handelt es sich jedoch nicht um eine befüllte Stegplatte, sondern um eine geschäumte Stegplatte mit anderen mechanischen und isolierenden Eigenschaften.

Die Befüllung von Stegplatten mit ungeschäumten, granulatförmigen Materialien (z.B. EPS-Perlen oder porösem Silicagel, kommerziell erhältlich beispielsweise unter dem Namen Nanogel® der Fa. Cabot Corp., Frankreich) oder Einschieblingen, d.h. Streifen, die in die Hohlkammern geschoben werden, zur Wärmeisolation / Hitzeabschirmung ist bekannt. Diese Befüllungen haben jedoch den Nachteil, dass sie locker in die Platten gefüllt werden und frei fließend bleiben. Beim nachträglichen Bearbeiten/Zuschneiden oder bei Beschädigungen der Platte kann es daher zu einer zumindest teilweisen Entleerung kommen. Durch die lockere bzw. inhomogene, nicht raumausfüllende Befüllung werden außerdem keine optimalen Isolationseigenschaften erzielt.

Andere bekannte Ansätze für die zusätzliche Isolierung von zur Verscheibung eingesetzten Platten haben das Problem, dass sie die Lichtdurchlässigkeit auf sehr geringe Werte reduzieren.

Die erfindungsgemäße teilweise lichtdurchlässige, gefüllte Hohlkammern enthaltende Platte stellt für die bereits seit längerem bestehenden Bedürfnisse insbesondere von Anwendern, die Verscheibungen mit Stegplatten an Orten bzw. in Regionen mit hoher Sonneneinstrahlung einsetzen, eine die Nachteile des Stands der Technik überwindende Lösung dar. Dabei sind alle oder Teile der Hohlkammern der Platte im wesentlichen raumausfüllend mit einem Füllstoff mit isolierenden Eigenschaften ausgefüllt, d.h. der Füllstoff nimmt das komplette Volumen der Hohlkammer ein oder es verbleibt nur ein vernachlässigbarer kleiner Spalt zwischen Füllung und Innenwand der Hohlkammer, d.h. die Füllung besitzt wenigstens 90 %, bevorzugt wenigstens 95 % und besonders bevorzugt wenigstens 98 % des Volumens der Hohlkammer. In der erfindungsgemäßen Platte enthält die Kammer nicht mehr einen freifließenden Füllstoff aus einzelnen Teilchen, sondern einen Füllstoffkörper mit einem Hohlkammer-ausfüllenden Volumen, der in einer bevorzugten Form expandiert ist und daher Gasbläschen beinhaltet bzw. eine Schaumstruktur aufweist.

Die erfindungsgemäße Platte erfüllt die Anforderungen an eine teilweise Transparenz und gute Isolationseigenschaften und lässt sich außerdem ohne technischen Aufwand nach der Herstellung bearbeiten.

Unter Platte ist dabei eine im wesentlichen rechteckige Platte aus Kunststoff zu verstehen, die über interne Kanäle verfügt, die sich mit dem Füllstoff bzw. dem Füllstoff-Precursor, im folgenden genannt Basiskomponente, befüllen lassen.

Die als Ausgangsmaterial für die vorliegende Erfindung verwendete Platte ist hergestellt aus einem thermoplastischen transparenten Material. In einer bevorzugten Ausführungsform betrifft die Erfindung Stegdoppelplatten oder Stegmehrfachplatten, die beispielsweise in der US-A 5972475, in der EP-A 0110221, in Saechtling Kunststoff-Taschenbuch, 25. Ausgabe (1992), S. 428, in Hansen/Knappe/Potente, Handbuch der Kunststoff-Extrusionstechnik, Bd. 2 - Extrusionsanlagen (1986), S. 234 sowie in den dort zitierten Dokumenten beschrieben werden.

Derartige Platten aus Polycarbonat, aber auch aus anderen Kunststoffen werden mittels Extrusion gefertigt. Die Herstellung von Stegplatten z.B. aus Polycarbonat ist ebenfalls hinlänglich bekannt und zum Beispiel beschrieben in "Technische Thermoplaste, Kunststoff Handbuch 3/1, Hanser Verlag", München, insbesondere Seiten 248-257.

Stegplatten bestehen aus mindestens zwei, meist planparallel angeordneten Platten (den sogenannten Gurten). Die oben und unten liegenden Gurte werden von einer Vielzahl meist paralleler Rippen, den sogenannten Stegen, im jeweiligen Abstand distanziert und fest mit einander verbunden. Die Stege können vertikal oder schräg auf den Platten stehen.

Stegdoppelplatten besitzen einen Obergurt und einen Untergurt sowie die dazwischen liegenden Stege. Stegmehrfachplatten besitzen neben dem Obergurt und einem Untergurt und den Stegen weitere meist parallel zum Obergurt und Untergurt verlaufende innen liegende Gurte (Zwischengurte). Durch die Anwesenheit der Zwischengurte entstehen mehrere übereinanderliegende Hohlkammern. Entsprechend der Anzahl der Gurte spricht man z.B. von Stegdreifach- oder Stegvierfachplatten etc.. Neben Stegdoppelplatten oder Stegmehrfachplatten mit rechteckigen Geometrien gibt es auch entsprechende Platten mit schräg angeordneten, nicht parallelen Gurten, die z.B. auch als Fachwerkplatten bezeichnet werden.

Je nach Anordnung der Gurte und Stege ergeben sich in der Platte kanalartige Hohlräume unterschiedlicher Form, die an der Schnittkante (Stirnseite) der Platte offen sind.

Die Außenoberflächen der Stegplatten können nach Bedarf eine zusätzliche Funktionalität (beispielsweise UV-Stabilisierung, Farbgestaltung, Mattierung, IR-Reflektion usw.) bekommen, z.B. durch Aufbringen von Schichten mittels Coextrusion oder durch Coating/Beschichtung.

Das Verfahren zum Aufbringen zusätzlicher Schichten z.B. aus Polycarbonat auf einer oder beiden Flächen der Ober- oder Untergurte ist ebenfalls hinlänglich bekannt (s. z.B. EP-A 368 094, EP-A 372 213, EP-A 0 548 822). Die Überzugsschicht können dabei z.B. UV-Absorber oder Perlglanzpigmente enthalten und auf dem Wege der Coextrusion oder durch Lackieren oder durch Reverse-Roll-Coating aufgebracht werden.

Zur Herstellung der Platte eignen sich bekannte thermoplastische Kunststoffe. Beispielsweise können Polycarbonat, Polystyrol, Polymethylmethacrylat, Polyethylen, Polypropylen, Polyvinylchlorid, Polyester, Acrylbutadienstyrol und Blends davon verwendet werden. Diese sind beschrieben in Saechtling, "Kunststoff Taschenbuch" 28. Aufl. (2001), Kapitel 4, Hanser Verlag, München, Wien.

In einer bevorzugten Ausführungsform ist die ungefüllte Platte lichtdurchlässig. Der Begriff "lichtdurchlässig" bezieht sich auf den sichtbaren Spektralbereich; zur Charakterisierung dient der Wellenlängenbereich von 380 bis 780 nm, insbesondere die Wellenlänge von 550 nm. Die Lichtdurchlässigkeit, die hier mit T bezeichnet ist, wird in der wissenschaftlichen Literatur überwiegend mit τD65 symbolisiert. Der thermoplastische Kunststoff und optional die Beschichtung der Platte weisen bevorzugt eine Lichtdurchlässigkeit T von wenigstens 50 %, vorzugsweise 60 bis 94 % haben.

Ganz besonders bevorzugt besteht die Stegplatte aus transparenten Thermoplasten wie Polycarbonat und/oder Polymethylmethacrylaten sowie Blends enthaltend mindestens einen der beiden Thermoplasten. Besonders bevorzugt werden Polycarbonat und Polymethylmethacrylat, ganz besonders bevorzugt Polycarbonat eingesetzt. Polycarbonat ist als thermoplastisch verarbeitbarer Kunststoff bekannt. Die Polycarbonat-Kunststoffe sind vorwiegend aromatische Polycarbonate auf Basis von Bisphenolen, insbesondere Bisphenol A.

Zur Herstellung von Polycarbonaten sei beispielhaft auf "Schnell", Chemistry and Physics of Polycarbonats, Polymer Reviews, Vol. 9, Interscience Publishers, New York, London, Sydney 1964, auf D.C. PREVORSEK, B.T. DEBONA and Y. KESTEN, Corporate Research Center, Allied Chemical Corporation, Moristown, New Jersey 07960, "Synthesis of Poly (ester) carbonate Copolymers" in Journal of Polymer Science, Polymer Chemistry Edition, Vol. 19, 75-90 (1980), auf D. Freitag, U. Grigo, P.R. Müller, N. Nouvertne, BAYER AG, "Polycarbonates" in Encyclopedia of Polymer Science and Engineering, Vol. 11, Second Edition, 1988, Seiten 648-718 8 und schließlich auf Dres. U. Grigo, K. Kircher und P.R. Müller "Polycarbonate" in BeckerBraun, Kunststoff-Handbuch, Band 3/1, Polycarbonate, Polyacetale, Polyester, Celluloseester, Carl Hanser Verlag München, Wien 1992, Seiten 117-299 verwiesen. Die Herstellung erfolgt vorzugsweise nach dem Phasengrenzflächenverfahren oder dem Schmelze-Umesterungsverfahren. Transparente Stegplatten sind beispielsweise kommerziell erhältlich als Makrolon Multi UV (Bayer), Lexan Thermoclear (Sabic), Marlon ST Longlife (Brett Martin), Macrolux (EMP) und Arcoplus (Dott. Gallina).

Die Hohlkammern bzw. ein Teil der Hohlkammern der erfindungsgemäßen Platte enthalten ein vorzugsweise geschäumtes Material, im folgenden genannt "Füllstoff", welches die Hohlkammern oder einen Teil der Hohlkammern komplett oder annhähernd komplett ausfüllt. Der Füllstoff wird bevorzugt aus einer expansionsfähigen Zusammensetzung, im folgenden genannt "Basiskomponente", hergestellt. Die Basiskomponente liegt zunächst in einer Form vor, in der sie in die Hohlkammern gefüllt werden kann, z.B. in Form von Partikeln, Granulaten oder Streifen, oder in einer fließfähigen Form. Nach dem Einfüllen in die Hohlkammern wird die Basiskomponente aufgeschäumt oder ausgedehnt und / oder gegebenenfalls verklebt.

In einer bevorzugten Ausführungsform ist der Füllstoff ein Schaumstoff mit einer Struktur mit geschlossenen Zellen, wodurch sich der thermische Isolierwert der Platten deutlich verbessert.

Die Transparenz und die Isolationseigenschaften der Platten können durch die Wahl des Füllstoffs und den Anteil der gefüllten Hohlkammern eingestellt werden. Auch bei vollständig gefüllten Hohlkammern sorgen die Stege der Platten für eine teilweise Lichtdurchlässigkeit der Platten.

Die Expansionsfähigkeit und die Expansion der Basiskomponente kann durch eine der unter den folgenden Punkten a - f) beschriebenen Methoden folgendermaßen erreicht werden:
a) Einer Polymermatrix, enthaltend ein Polymer oder Copolymer mit einer Schmelztemperatur zwischen 50 und 140 °C und elastischen Eigenschaften, werden expansionsfähige polymere Mikrosphären zugesetzt. Der hier verwendete Begriff "expansionsfähige polymere Mikrosphären" beschreibt sphärische Partikel mit Durchmessern im Mikrometer - Bereich (1µm - 1000µm (1mm)) mit einer polymeren thermoplastischen Außenschale und einem im Kern enthaltenden Treibmittel, welches sich unter Hitzeeinwirkung ausdehnt. Bei dem Treibmittel handelt es sich im allgemeinen um eine organische Substanz mit einem Siedepunkt unterhalb der Erweichungstemperatur der polymeren Außenschale. Die Ausdehnung des Treibmittels wiederum verursacht eine Expansion der gesamten polymeren Mikrosphäre. Expansionsfähige Mikrosphären sind beispielsweise bekannt aus der EP-A 1417255 und der US-A 6103152, in der ihre Verwendung zur Herstellung einer extrudierbaren Kunststoffmischung und sogenannten ,,foam-in-place" Artikeln daraus beschrieben wird. Expansionsfähige polymere Mikrosphären sind unter anderem kommerziell erhältlich unter dem Markennamen Expancel® von der Fa. AkzoNobel, oder Advancell® von der Fa. Sekisui.

Zur Herstellung der Basiskomponente werden Mikrosphären bei Temperaturen unterhalb ihrer kritischen Ausdehnungstemperatur in die thermoplastische Kunststoffmatrix eingearbeitet. Die Mischung wird dann durch übliche Verfahren (z.B. Extrusion) zu Granulaten, Streifen, Stäben oder Profilen weiterverarbeitet. Als thermoplastische Polymere oder Copolymere für die Kunststoffmatrix der Basiskomponente kommen beispielsweise Polyethylen und Ethylen-Copolymere wie EVA (Ethylenvinylacetat), EMA (Ethylenmethylacrylat), EBA (Ethylenbutylacrylat), EAMA (Ethylen-Acrylsäure-Maleinsäureanhydrid - Copolymer), Ethylen- Methylacrylat-Glycidyl-Methacrylsäureester - Copolymer), PP (Polypropylen) oder Mischungen dieser Polymere in Frage. Die Verarbeitungstemperatur des thermoplastischen Polymers soll unterhalb der kritischen Expansionstemperatur der Mikrosphären liegen, so dass die Einarbeitung in das Polymer und die Verarbeitung der Zusammensetzung ohne eine Expansion möglich ist.

Zusätzlich kann die Basiskomponente gegebenenfalls noch weitere Additive enthalten, beispielsweise Verarbeitungshilfsmittel, Schmiermittel, Farbpigmente, Stabilisatoren, z.B. Hitzestabilisatoren, Flammschutzmittel, zusätzliche Schaummittel usw.. Mögliche Additive für Thermoplasten werden z.B. in WO 99/55772, S. 15 - 25, EP-A 1 308 084 und in den entsprechenden Kapiteln des "Plastics Additives Handbook" , ed. Hans Zweifel, 5th Edition 2000, Hanser Publishers, Munich beschrieben.

Werden die Mikrosphären auf eine Temperatur oberhalb der kritischen Expansionstemperatur erhitzt, dehnen sie sich aus. Beim Abkühlen erstarrt die Außenschale ohne Kontraktion, so dass die Kugeln ihr ausgedehntes Volumen behalten. Vorzugsweise haben die Mikrokugeln anfangs einen Durchmesser von 5 bis 40 µm und dehnen sich auf den 3 - 10fachen Durchmesser aus. Die kritischen Expansionstemperaturen der Mikrosphären liegen üblicherweise bei Temperaturen zwischen 90 und 210°C. Die eingesetzten expansionsfähigen Mikrosphären werden beispielsweise aus den bei der Fa. AkzoNobel kommerziell erhältlichen Mikrosphären so ausgewählt, dass die kritische Expansionstemperatur oberhalb der Erweichungstemperatur der thermoplastischen Kunststoffinatrix liegt.

Nach der Befüllung mit der Basiskomponente werden die befüllten Platten auf eine Temperatur erwärmt, bei der sich der Werkstoff der Platte noch nicht verformt, bei der sich aber die Mikrosphären und mit ihr die Polymermatrix ausdehnen. Das Erwärmen der Platten kann in einem Ofen stattfinden, in dem die Platten z. B. mit Warmluft oder Infrarotstrahlung erwärmt werden. Dieser Prozess kann sowohl kontinuierlich (die Platten werden durchlaufend hinteneinander durch einen Ofen geführt, z.B. über ein Förderband), als auch diskontinuierlich sein (die Platten werden gestapelt und zusammen eine bestimmte Zeit in einen Ofen geschoben). Die Platten werden so lange erwärmt, bis das Füllmaterial sich ausreichend ausgedehnt hat und der Schaumstoff die Hohlkammem komplett ausfüllt. Anschließend werden die Platten bis auf Raumtemperatur abgekühlt.
b) In einer anderen Ausführungsform handelt es sich bei der Basiskomponente um extrudierte Streifen, Stäbe oder Profile auf Basis einer Polymermatrix, enthaltend ein Polymer oder Copolymer mit einer Schmelztemperatur zwischen 50 und 140 °C und elastischen Eigenschaften. Dieser Polymermatrix werden übliche Treibmittel und / oder Schaummittel zugesetzt. Der Extrusionsprozess wird so gehandhabt, dass die Polymermatrix eine teilweise Expansion des Treibmittels oder Schaummittels voll stattfmden kann. Als thermoplastische Polymere oder Copolymere für die Kunststoffmatrix der Basiskomponente kommen beispielsweise Polyethylen und Ethylen-Copolymere wie EVA (Ethylenvinylacetat), EMA (Ethylenmethylacrylat), EBA (Ethylenbutylacrylat), EAMA (Ethylen-Acrylsäure-Maleinsäureanhydrid - Copolymer), Ethylen- Methylacrylat-Glycidyl-Methacrylsäureester - Copolymer), PP (Polypropylen) oder Mischungen dieser Polymere in Frage.

Zusätzlich kann die Polymermatrix gegebenenfalls noch weitere Additive enthalten, beispielsweise Verarbeitungshilfsmittel, Schmiermittel, Farbpigmente, Stabilisatoren, z.B. Hitzestabilisatoren, Flammschutzmittel, zusätzliche Schaummittel usw.. Mögliche Additive für Thermoplasten werden z.B. in WO 99/55772, S. 15 - 25, EP-A 1 308 084 und in den entsprechenden Kapiteln des "Plastics Additives Handbook" , ed. Hans Zweifel, 5th Edition 2000, Hanser Publishers, Munich beschrieben.

Das teilweise expandierte Extrudat wird in die Hohlkammer der Platten gefüllt, beispielsweise durch Einschieben des Streifens. Die Platte wird dann auf eine Temperatur erwärmt, bei der sich der Werkstoff der Platte noch nicht verformt, bei der sich aber der Basiskomponente weiter ausdehnt. Wird die Basiskomponente in Form von Streifen, Stäben oder Profilen wieder auf eine Temperatur oberhalb der Erweichungstemperatur der Polymermatrix erwärmt, dehnt sie sich weiter aus. Beim Abkühlen erstarrt die Polymermatrix ohne Kontraktion, so dass die Basiskomponente ihr ausgedehntes Volumen behält und im Idealfall die Hohlkammer vollständig ausfüllt.

Das Erwärmen der Platten kann analog mit dem unter a) beschriebenen Prozess stattfinden.
c) In einer anderen Ausführungsform handelt es sich bei der Basiskomponente um einen temporär komprimierten Füllstoff, der sich nach der Befüllung in den Hohlkammern wieder ausdehnt. Die Ausdehnung erfolgt entweder durch Einfluss von Temperatur oder durch ein sogenanntes Memory-Verhalten (zeitverzögerte Ausdehnung in die ursprüngliche Form). Zusätzlich kann die Basiskomponente noch andere Materialien oder Schaumstoffe mit besserer Warmedämmung enthalten, wie z.B. PUR (Polyurethan), PIR (Polyisoeyanurat), EPS (expandiertes Polystyrol), XPS (extrudiertes Polystyrol), PF-Schaum (Phenolschaum). Der komprimierte Dämmstoff wird in Stabform oder in Granulatform in die Hohlkammern der lichtdurchlässigen Platte eingeführt.

In diesem Schritt hat der komprimierte Dämmstoff ein deutlich kleineres Volumen als die Hohlkammern, was das Einführen des Schaumstoffes in die Hohlkammern vereinfacht. Wenn der Memory-Effekt durch die Temperatur getriggert wird, werden die befüllten Platten auf eine Temperatur, bei der der Werkstoff der Platte sich noch nicht verformt, bei der sich aber das komprimierte Füllmaterial ausdehnt, erwärmt. Das Erwärmen der Platten kann in einem Ofen stattfinden, wie schon in a) beschrieben.
d) In einer anderen Ausführungsform enthält die Basiskomponente PUR (Polyurethan), welches kurz nach der Herstellung durch Mischung seiner Komponenten in flüssiger Form in die Hohlräume der Platte eingebracht wird und dort anschließend aufschäumt zu einem harten PUR-oder PIR- Schaum. Die Herstellung von PUR- und PIR-Schäumen ist bekannt und wird z.B. im Saechtling Kunststoff-Taschenbuch, 23. Ausgabe (1986), S.408 beschrieben.
e) In einer anderen Ausführungsform enthält die Basiskomponente einen ausgedehnten oder aufgeschäumten Werkstoff, der in Form von Partikeln wie Polymerkügelchen, z.B. EPS-Kügelchen (expandiertes Polystyrol), oder in Form von Streifen, wie z.B. Einschieblingen aus PUR-Schaum (Polyurethan), PIR- Schaum (Polyisocyanurat), EPS (expandiertes Polystyrol), XPS (extrudiertes Polystyrol), oder PF-Schaum (Phenolschaum) in die Kammern eingebracht wird. Die Kügelchen werden anschließend miteinander verklebt. Die Verklebung kann entweder Wärmeeintragung, z.B. Einbringen von Dampf (Aufschmelzen der Polymeroberfläche) oder mit Hilfe von Klebstoff, der sich beispielsweise durch Hitze aktivieren lässt, geschehen. Der Werkstoff der Platte muss so gewählt werden, das er sich bei der Temperatur des Dampfs nicht verformt (z.B. Polycarbonat), das Material der Kügelchen muss bei der Temperatur des Dampfes zusammenschmelzen (z.B. expandiertes Polystyrol). Der Klebstoff kann entweder bereits vor dem Einbringen der Kügelchen auf deren Oberfläche aufgetragen sein oder nachträglich eingebracht werden. Die Aktivierung des Klebstoffs kann dann wiederum durch die Einbringung von Wärme oder Dampf geschehen.
f) In einer weiteren Variante werden Einschieblinge aus einem der unter c) genannten Füllstoffe, deren Dimensionen nur wenig geringer sind als die der Hohlkammer, oder Mineralwolle / Glaswolle in die Hohlkammern eingebracht. Diese können nach dem Einbringen verklebt werden. Durch ihre raumausfüllenden Dimensionen (mindestens 90%, bevorzugt mindestens 95% und ganz besonders bevorzugt mindestens 98% des Volumens der Hohlkammer) sind diese Füllstoffe jedoch ebenfalls in der Hohlkammer fixiert, auch wenn sie nicht verklebt oder nachträglich noch expandiert werden.

Die Erfindung soll durch folgende, teilweise auch in den Darstellungen gezeigten Ausführungsbeispiele weiter erklärt werden. Die Erfindung ist jedoch nicht auf diese konkreten Beispiele beschränkt:

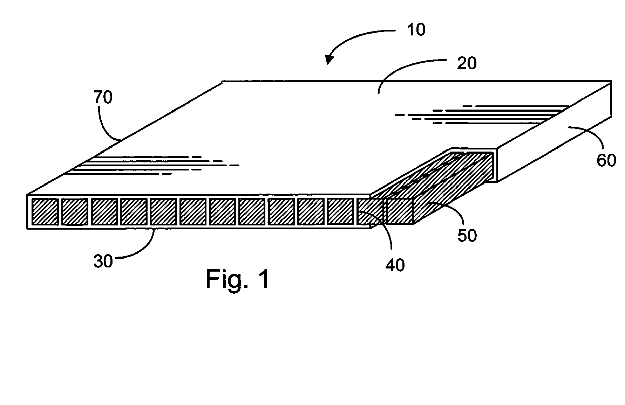

Das in Fig. 1 wiedergegebene Ausführungsbeispiel zeigt eine Stegdoppelplatte *(10)* aus zwei planparallel angeordneten Platten (den sogenannten Gurten). Die oben und unten liegenden Gurte (20) und (30) werden von einer Vielzahl meist paralleler Rippen (40), den sogenannten Stegen, im jeweiligen Abstand distanziert und fest mit einander verbunden. In diesem Ausführungsbeispiel stehen die Stege senkrecht auf den Gurten. Dadurch ergeben sich Hohlkammern mit rechteckigem Querschnitt, die hier vollständig mit Füllstoff gefüllt sind (50). Ober- (20) und / oder Untergurt (30) sind eventuell noch mit einer Schutzschicht versehen. Die Platte wird an den Längsseiten von zwei Aussenstegen (60) und (70) abgeschlossen, die Stirnseiten sind offen.

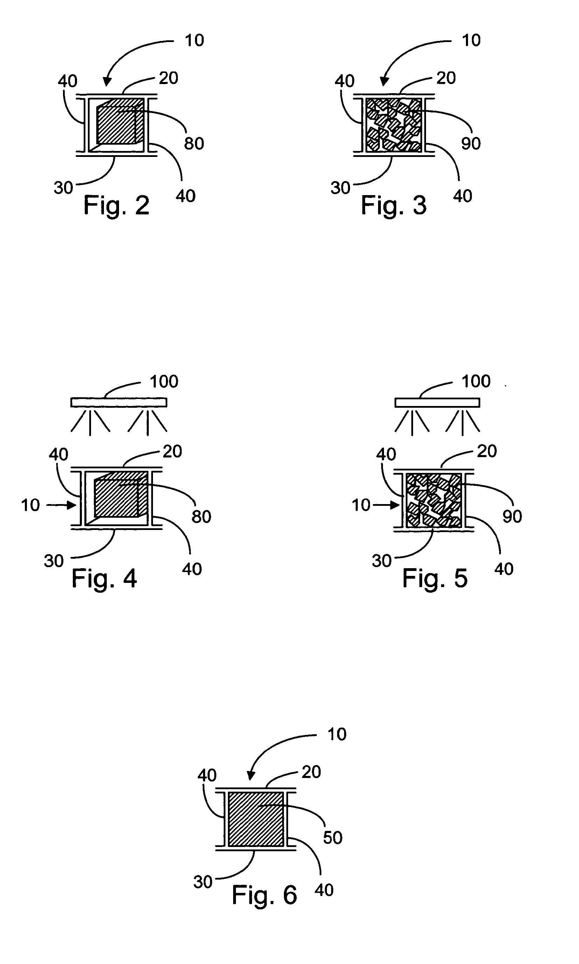

Fig. 2 und 3 zeigen in zwei Ausführungbeispielen eine Hohlkammer einer Stegdoppelplatte *(10),* in die ein Einschiebling oder Extrudat (80) bzw. noch nicht expandierte oder komprimierte Schaumstoffgranulate (90) gefüllt wurden.

In Fig 4 und Fig. 5 ist dargestellt, wie sich die Befüllung beispielsweise im Ofen *(100)* ausdehnt, um dann im finalen Produkt (Fig. 6) die Hohlkammer komplett auszufüllen.

In einer Ausführungsform enthalten alle Hohlkammern der Platte den gleichen Schaumstoff. In einer anderen Ausfübrungsform der Erfindung enthalten die Hohlkammern der Platte unterschiedliche Schaumstoffe, so dass es beispielsweise möglich ist, die farbliche Gestaltung und die Lichtdurchlässigkeit des Endprodukts zu variieren und unterschiedliche Eigenschaften an der Ober- und Unterseite des Endprodukts bzw. von Kammer zu Kammer zu erzeugen.

Die erfindungsgemäße Platte eignet sich insbesondere überall in solchen Anwendungen, wo eine Semitransparenz verbunden mit guten Isolationseigenschaften gefordert ist. Insbesondere kann sie zur Herstellung von Dach- oder Wandsystemen, beispielsweise von Wintergartenverscheibungen, genutzt werden.

## Patentansprüche

1. Platte enthaltend interne Hohlkammern, die **dadurch gekennzeichnet ist, dass** alle Hohlkammern oder Teile der Hohlkammern im wesentlichen raumausfüllend einen Füllstoff mit Isolationseigenschaften enthalten.

2. Platte nach Anspruch 1, **dadurch gekennzeichnet, dass** sie teilweise lichtdurchlässig ist.

3. Platte nach Anspruch 1 oder 2, **dadurch gekennzeichnet, dass** es sich bei dem Füllstoff um ein expandiertes Material handelt.

4. Platte nach Anspruch 3, wobei es sich bei dem Füllstoff um einen Schaumstoff mit geschlossener Zellstruktur handelt.

5. Platte nach Anspruch 3, wobei der expandierte Füllstoff hergestellt ist aus einer Basiskomponente enthaltend thermoplastisches Polymer und expansionsfähigen polymere Mikrosphären.

6. Platte nach Anspruch 3, wobei der expandierte Füllstoff hergestellt ist aus einer extrudierten Basiskomponente enthaltend ein thermoplastisches Polymer und Treibmittel und/oder Schaummittel.

7. Platte nach Anspruch 3, wobei der Füllstoff aus einer komprimierte Basiskomponente hergestellt ist, die sich in der Hohlkammer durch Einfluss von Temperatur oder Memory-Verhalten ausdehnt.

8. Platte nach Anspruch 3, wobei der Füllstoff aus Polyurethan (PUR), Polyisocyanurat (PIR), expandiertem Polystyrol (EPS), extrudiertes Polystyrol (XPS), oder Phenolschaum ist.

9. Platte nach einem der vorhergehenden Ansprüche, wobei es sich bei dem Füllstoff in der Hohlkammer um einen Füllstoffkörper handelt, der mindestens 90 %, bevorzugt 95%, ganz besonders bevorzugt 98 % und 100 % des Volumens der Hohlkammer ausfüllt.

10. Platte nach einem der vorhergehenden Ansprüche, **dadurch gekennzeichnet, dass** sie hergestellt ist durch ein Verfahren enthaltend die folgenden Schritte:
a. Befüllen der Hohlkammern mit einer Basiskomponente bestehend aus einem nicht oder nur teilweise expandierten Material
b. Expansion der Basiskomponente in der Hohlkammer

11. Platte nach einem der Ansprüche 1 - 9, **dadurch gekennzeichnet, dass** sie hergestellt ist durch ein Verfahren enthaltend die folgenden Schritte:
a. Befüllen der Hohlkammern mit einer Basiskomponente aus einem expandierten Material in Partikel - oder Streifenform
b. Verkleben der Basiskomponente in der Hohlkammer mittels Wärmeeintragung oder Einbringen von Klebstoff in die Hohlkammer

12. Platte nach einem der Ansprüche 1 - 8, **dadurch gekennzeichnet, dass** sie hergestellt ist durch ein Verfahren enthaltend den folgenden Schritt:
a. Befüllen der Hohlkammern durch Einschieben von Füllstoffkörpern, die mindestens 90%, bevorzugt 95%, ganz besonders bevorzugt 98 % des Volumens der Hohlkammer besitzen.

13. Platte nach einem der vorhergehenden Ansprüche, **dadurch gekennzeichnet, dass** nur ein Teil ihrer Hohlkammern Füllstoff enthalten.

14. Platte nach einem der vorhergehenden Ansprüche, wobei es sich bei der Platte um eine Stegplatte aus einem transparenten thermoplastischen Kunststoff handelt.

15. Verwendung einer Platte nach einem der vorhergehenden Ansprüche zur Herstellung von semitransparenten Verscheibungen, Dach- oder Wandsystemen.
